Europäisches Patentamt

European Patent Office

Office européen des brevets

(11) Publication number: **0 063 372**
**B1**

## EUROPEAN PATENT SPECIFICATION

(45) Date of publication of patent specification: **07.08.85**

(21) Application number: **82103235.6**

(22) Date of filing: **16.04.82**

(51) Int. Cl.⁴: **B 62 D 25/08**

(54) Splash guard.

(30) Priority: **17.04.81 JP 57064/81**

(43) Date of publication of application:
**27.10.82 Bulletin 82/43**

(45) Publication of the grant of the patent:
**07.08.85 Bulletin 85/32**

(84) Designated Contracting States:
**DE FR GB IT**

(56) References cited:
**GB-A-1 458 821**
**US-A-3 753 573**
**US-A-4 060 142**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Suzuki, Takashi**
**3-4688-1, Sobudai**
**Zama City (JP)**
Inventor: **Sogao, Kazuhiro**
**2-21-4-436, Korai, Oiso-cho Naka-gun**
**Kanagawa Prefecture (JP)**
Inventor: **Mineno, Tadao**
**No. 5-1 Kopo-Shonan-Otsu 446 Otsu Machi**
**Yokosuka City (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

### Background of the Invention
#### 1. Field of the Invention

The present invention relates to a splash cover or guard for protecting an automobile engine and its accessories from tire splash.

#### 2. Description of the Prior Art

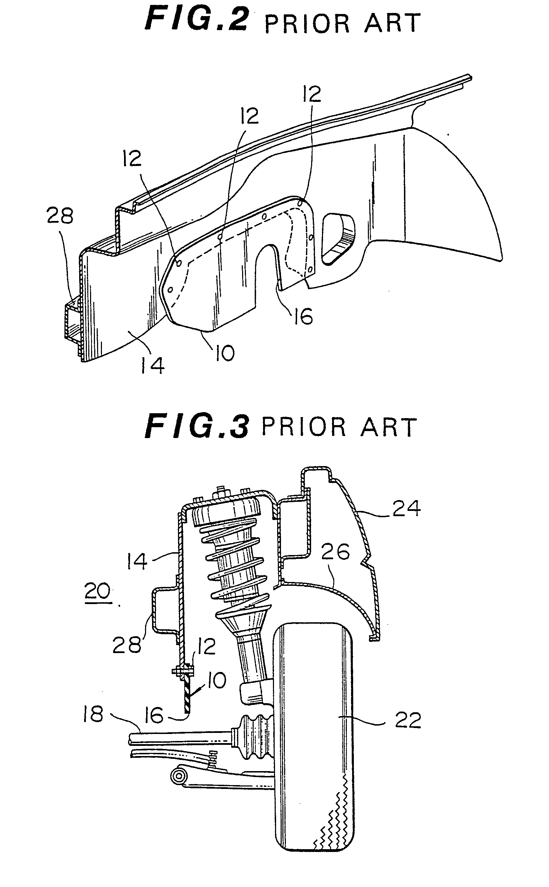

Many of recently produced automobiles are equipped with a splash guard of this kind. A typical example of such splash guard is shown in Figs. 2 and 3.

Referring to the figures, a splash guard is indicated at 10 and bolted 12 to a hood ledge 14. The splash guard 10 is made of rubber and has an inverted U-shaped cut portion 16 to receive therein a drive shaft 18 for transmitting a power from an engine (not shown) in an engine compartment 20 to a wheel or tire 22. Indicated by the reference numeral 24 is a front fender, by 26 a fender protector and by 28 a front side member.

A splash guard of this type has the drawback that it cannot effectively and assuredly protect the engine and its accessories from tire splash due to the relatively large space between the cut portion 16 of the splash guard 10 and the drive shaft 18 which is inevitable to prevent interengagement of the splash guard 10 and the drive shaft 18 and through which tire splash can reach the engine and its accessories.

### Summary of the Invention

In accordance with the present invention, there is provided an improved and novel splash guard for protecting an engine and its accessories from tire splash.

An automobile has a hood ledge defining part of an engine compartment and a drive shaft extending laterally across the hood ledge.

A splash guard is secured to the hood ledge to depend downwardly therefrom and comprises a cut portion for receiving therein the drive shaft in a manner to provide a space therebetween.

The above structure substantially follows the conventional fashion. In accordance with the present invention, the splash guard further comprises a flange provided on the peripheral edge of the cut portion and projecting toward the engine compartment along the drive shaft.

Due to the provision of the flange described as above, the splash guard of this invention can effectively and assuredly protect the engine and its accessories from tire splash since that flange is quite effective in shutting off tire splash which otherwise can reach the engine and its accessories through the space between the drive shaft and the splash guard.

It is accordingly an object of the present invention to provide an improved and novel splash guard which can effectively and assuredly protect an engine and its accessories from tire splash.

It is another object of the present invention to provide an improved and novel splash guard of the above described character which can be put into practical use without substantially increasing the manufacturing and assembling cost.

It is a further object of the present invention to provide an improved and novel splash guard of the above described character which also can contribute to the reduction in the number of constituent parts of an automobile to which it is mounted.

### Brief Description of the Drawings

The features and advantages of the splash guard according to the present invention will become more clearly appreciated from the following description taken in conjunction with the accompanying drawings, in which:

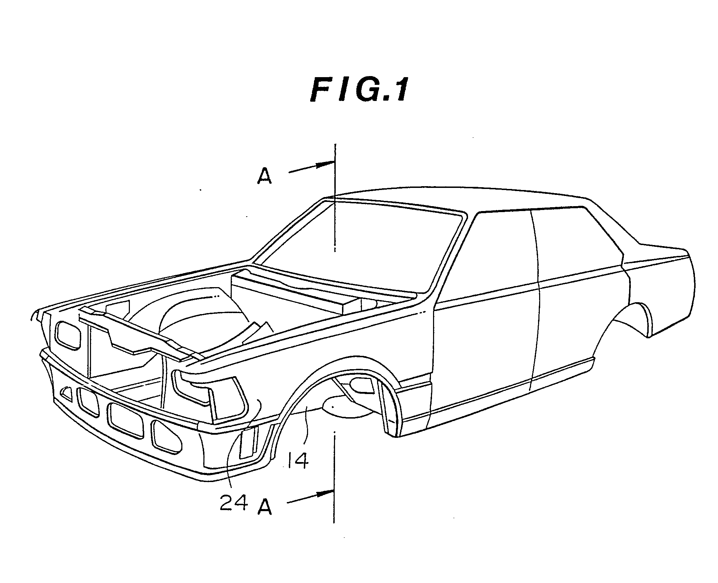

Fig. 1 is a perspective view of a vehicle body to which a splash guard is adapted for adoption by way of example;

Fig. 2 is a perspective view of a prior art splash guard and adjacent parts of a vehicle body;

Fig. 3 is a sectional view corresponding to what is taken along the line A—A of Fig. 1 and shows the splash guard of Fig. 2 together with adjacent parts of an automobile;

Figs. 4 and 5 are views similar to Figs. 2 and 3, respectively but show a splash guard according to an embodiment of the present invention; and

Figs. 6 and 7 are views similar to Figs. 2 and 3, respectively but show a splash guard according to another embodiment of the present invention.

### Description of the Preferred Embodiments

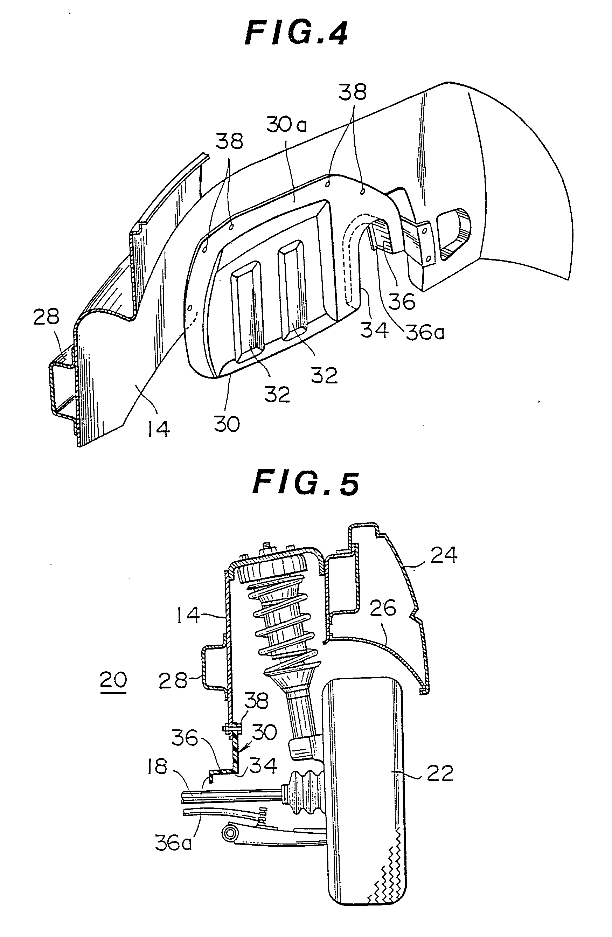

Referring to Figs. 4 and 5 in which like parts to those of the prior art structure of Figs. 2 and 3 are designated by like reference characters, a splash guard according to an embodiment of the present invention is generally indicated at 30 and provided with a plurality of embossed portions 32 to increase the rigidity. The splash guard 30 has a cut portion 34 for receiving therein the drive shaft 18 in a conventional manner, i.e., in a manner to provide a space about the drive shaft 18 to prevent interengagement of the drive shaft 18 and the splash guard 30. At the peripheral edge of the cut portion 34, the splash guard 30 is also provided with a flange 36 projecting toward the engine compartment 20 along the drive shaft 18. The splash cover 30 is a single piece and molded from a synthetic resinous material. The flange 36 has a free end 36a which is bent toward the drive shaft 18.

The splash guard 30 thus structured according to the present invention is rigidly secured to the hood ledge 14 by means of bolts 38.

By the foregoing, it is to be understood that due to the provision of the flange 36, the splash guard 30 of the present invention is enabled to effectively and assuredly protect the engine and its accessories from tire splash since the flange 36 is quite effective in shutting off tire splash which otherwise can reach the engine and its accessories through the foregoing space between the drive shaft 18 and the splash guard 30.

It is further to be understood that the bent end 36a of the flange 36 enables the splash guard 30 to shut off tire splash more effectively and assuredly.

It is yet further to be understood that the splash guard of this invention is well situated for adoption to front engine-front wheel drive vehicles and can produce excellent effect though so simple in structure.

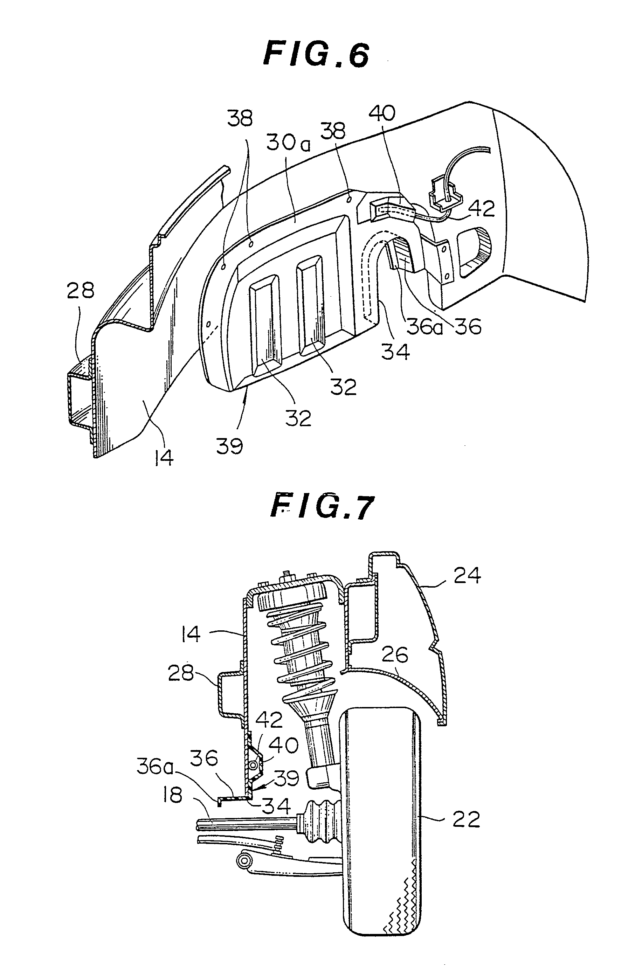

Referring to Figs. 6 and 7 in which like parts to those of the previous embodiment are designated by like reference characters, a splash guard according to another embodiment of the present invention is generally designated at 39. This embodiment is substantially similar to the previous embodiment except for a pocket-like embossed portion 40 provided to the splash guard 39 for receiving therein a front brake tube 42 to protect same from tire splash. Due to this pocket-like embossed portion 40, a protector otherwise necessary for the front brake tube 42 becomes unnecessary. This embodiment therefore can contribute to the reduction in the number of constituent parts of an automobile to which it is mounted as well as can produce substantially the same effect as the previous embodiment.

Obviously, many variations and modifications of the present invention are possible in light of the above teachings. It is, therefore, to be understood that within the scope of the appended claims, the invention may be practiced otherwise than as specifically described.

## Claims

1. A splash guard (30, 39) for an automobile having a hood ledge (14) defining part of an engine compartment (20) and a drive shaft (18) extending laterally across the hood ledge (14), said splash guard (30, 39) being secured to said hood ledge (14) to depend downwardly therefrom and comprising a cut portion (34) for receiving therein said driven shaft (18) in a manner to provide a space therebetween, characterised by a flange (36) provided on the peripheral edge of said cut portion (34) and projecting toward said engine compartment (20) along said drive shaft (18).

2. A splash guard (39) as set forth in Claim 1, further comprising a pocket-like embossed portion (40) for receiving therein a front brake tube (42) to protect same from tire splash.

3. A splash guard (30, 39) as set forth in Claim 1 or 2, being a single piece and molded from a synthetic resinous material.

4. A splash guard (30, 39) as set forth in Claim 1 or 2, in which said flange has a free end which is bent toward said drive shaft.

## Patentansprüche

1. Spritzschutz (30, 39) für ein Kraftfahrzeug mit einem Abdeckblech (14), das Teil eines Motorraums (20) ist, und einer Antriebswelle (18), die sich quer zum Abdeckblech (14) erstreckt, wobei der Spritzschutz (30, 39) an dem Abdeckblech (14) nach unten hängend befestigt ist und einen Ausschnittsbereich (34) zur Aufnahme der Antriebswelle (18) unter Beachtung eines gegenseitigen Abstandes aufweist, dadurch gekennzeichnet, daß an dem Umfangsrand des Ausschnittsbereichs (34) ein Flansch (36) ausgebildet ist, der gegen den Motorraum (20) gerichtet ist und längs der Antriebswelle (18) verläuft.

2. Spritzschutz (39) nach Anspruch 1, weiterhin enthaltend einen taschenartig ausgebauchten Abschnitt (40) zur Aufnahme einer Vorderbremsleitung (42), um diese gegen Reifenspritzer zu schützen.

3. Spritzschutz (30, 39) nach Anspruch 1 oder 2, der einstückig ausgebildet und aus einem Kunstharzmaterial hergestellt ist.

4. Spritzschutz (30, 39) nach Anspruch 1 oder 2, bei welchem der Flansch ein freies Ende aufweist, das gegen die Antriebswelle gebogen ist.

## Revendications

1. Protection contre l'éclaboussure (30, 39) pour une automobile ayant une saillie de capot (14), définissant une partie d'un compartiment moteur (20) et un arbre de transmission (18) s'étendant latéralement à travers la saillie de capot (14), ladite protection contre l'éclaboussure (30, 39) étant fixée à ladite saillie du capot (14) pour en pendre vers le bas et comprenant une partie découpée (34) pour recevoir l'arbre de transmission (18) de façon à laisser un espace entre eux, caractérisée par un rebord (36) prévu sur le bord périphérique de la partie découpée (34) et faisant saillie vers le compartiment moteur (20) le long de l'arbre de transmission (18).

2. Protection contre l'éclaboussure (39) selon la revendication 1, comprenant de plus une partie en relief (40) en forme de poche pour y recevoir une tuyau de frein avant (42) pour le protéger de l'éclaboussure des pneumatiques.

3. Protection contre l'éclaboussure (30, 39) selon la revendication 1 ou 2, étant en une seule pièce et moulée en une matière résineuse synthétique.

4. Protection contre l'éclaboussure (30, 39) selon la revendication 1 ou 2, où ledit rebord a une extrémité libre qui est courbée vers ledit arbre de transmission.

0 063 372

# FIG.1

A

24 A

14

1

# FIG.2 PRIOR ART

# FIG.3 PRIOR ART

2

0 063 372

# FIG.4

# FIG.5

3

## FIG.6

## FIG.7